# EUROPÄISCHE PATENTSCHRIFT

(11) **EP 1 046 560 B1**
(45) Veröffentlichungstag und Bekanntmachung des Hinweises auf die Patenterteilung: **10.08.2005**
(21) Anmeldenummer: 00105905.4
(22) Anmeldetag: 22.03.2000
(51) Int. Cl.: B60S 1/52, B60S 1/60

(54) **Scheinwerferreinigungsanlage für ein Kraftfahrzeug**
Headlamp cleaning device for a vehicle
Dispositif de nettoyage de phare pour un véhicule

(30) Priorität: 24.04.1999 DE 19918759
(43) Veröffentlichungstag der Anmeldung: 25.10.2000
(73) Patentinhaber: Volkswagen Aktiengesellschaft, 38436 Wolfsburg (DE)
(72) Erfinder: Helmke, Heiko, 38524 Sassenburg (DE); Erkens, Horst, 38518 Gifhorn (DE); Machalitza, Andreas, 38102 Braunschweig (DE); Kirschner, Manfred, Dipl.-Ing., 38368 Rottorf/Klei (DE)

(56) Entgegenhaltungen:
- EP-A- 0 743 232
- DE-A- 4 130 892
- DE-U- 9 309 852

## Beschreibung

Die Erfindung betrifft eine Scheinwerferreinigungsanlage für ein Kraftfahrzeug mit einer durch eine Öffnung in einer Außenwandung des Kraftfahrzeuges teleskopartig in eine Betriebsposition ausfahrbaren Hubdüsenanordnung, wobei die Öffnung in der Außenwandung in einer Ruheposition der Hubdüsenanordnung durch eine Abdeckung verschlossen ist.

Eine derartige Scheinwerferreinigungsanlage ist beispielsweise aus der deutschen Patentschrift DE 44 26 878 C2 bekannt. Bei der dortigen Scheinwerferreinigungsanlage ist die Hubdüsenanordnung an einem Scheinwerfergehäuse befestigt und wird durch eine im Bereich eines Randes der Öffnung der Außenwand schwenkbar gelagerte Abdeckung ausgefahren. Bei der dortigen Ausführung ist die Hubdüsenanordnung an dem Scheinwerfergehäuse und die Klappe an der Außenwandung befestigt. Dies hat zum Nachteil, daß um ein einwandfreies Ausfahren der Hubdüseneinrichtung sicherzustellen, die schwenkbar gelagerte Klappe relativ groß gewählt werden muß. Bei Fertigungsungenauigkeiten bzw. Lageabweichungen des Stoßfängers zu dem Scheinwerfer besteht ansonsten die Gefahr, daß die Hubdüsenanordnung beim Ausfahren an den Rand der Öffnung der Außenwandung anstößt. Ferner bereitet eine derartige Lösung Probleme, wenn die Außenwandung in der Regel ein Stoßfänger in Fahrtrichtung in einem verhältnismäßig spitzen Winkel zu der Hubdüseneinrichtung verläuft. Bei einem solchen spitzen Winkel führen auszugleichende Lageabweichungen der Hubdüseneinrichtung aufgrund der trigonometrischen Winkelbeziehungen zu einer erhebliche Vergrößerung der Klappe.

Des Weiteren ist aus der EP 0 743 232 A2 eine Befestigungseinrichtung für den Düsenträger einer Hubdüsenanordnung bekannt geworden, der unterhalb eines Scheinwerfers angeordnet ist. Bei dieser Befestigungseinrichtung ist der Düsenträger an dem in eine Karosserieöffnung einsetzbaren Scheinwerfer gehaltert und dabei an dem in Einsatzrichtung des Scheinwerfers weisenden Endabschnitt mit einem Befestigungselement des Scheinwerfers gelenkartig und dabei im Presssitz verbunden und mit dem frontseitigen Endabschnitt mittels eines Befestigungselementes an dem Fahrzeug festlegbar. Zudem kann der Düsenträger zur Montageerleichterung durch eine zwischen den beiden Befestigungselementen angeordnete Nut-Feder-Verbindung gehalten sein, die quer zur Verstellrichtung der am Düsenträger verstellbar angeordneten Düsen ein großes Spiel aufweist. Mit dieser Befestigungseinrichtung kann der Düsenträger einfach und schnell am Fahrzeug befestigt werden. Eine selbsttätige Justierung des Düsenträgers gegenüber der Öffnung in der Karosserieaußenwandung ist nicht vorgesehen.

Aufgabe der Erfindung ist es, eine Scheinwerferreinigungsanlage für ein Kraftfahrzeug nach dem Oberbegriff des Anspruchs 1 zu schaffen, bei der die Hubdüsenanordnung möglichst einfach und genau zu der Öffnung der Außenwandung positionierbar und montagefreundlich ausgebildet sein soll.

Diese Aufgabe wird bei einer Scheinwerferreinigungsanlage nach dem Oberbegriff des Anspruchs 1 durch dessen kennzeichnende Merkmale gelöst. Vorteilhafte Ausgestaltungen sind in den Unteransprüchen aufgeführt.

Die Erfindung besteht darin, dass die Hubdüsenanordnung zu deren Befestigung mit einem Halteflansch versehen ist, dem zwei in unterschiedliche Richtungen gerichtete Zentrierungen und/ oder Führungen zu deren Lagefixierung und Befestigung zugeordnet sind. Durch die dem Halteflansch zugeordneten Zentrierungen und/ oder die Führungen wird in vorteilhafter Weise erreicht, daß die Hubdüsenanordnung bei der Montage in ihre Solllage positionierbar ist, ohne dass besondere Maßnahmen zur Justierung erforderlich sind.

Die Führungen bzw. Zentrierungen werden zweckmäßigerweise möglichst nahe der Öffnung angeordnet. Hierdurch wird der Einfluß von Verformungen oder Fertigungsungenauigkeiten minimiert, so daß immer eine einwandfreie Ausfahrbewegung der Hubdüsenanordnung durch die Öffnung gegeben ist, ohne daß die Gefahr besteht, daß der Düsenkopf an dem Rand der Öffnung anstößt.

Der Halteflansch kann eine Anlagefläche aufweisen, die vorteilhafterweise im wesentlichen parallel oder unter Einschluß eines spitzen Winkels zu der Außenwandung verläuft.

Die Zentrierung kann zum Beispiel in einer Zentriernase bestehen, die in eine Öffnung des Befestigungsansatzes eingreift und/oder in einer Führung am Befestigungsansatz geführt sein. Mittels einer Kombination der erfindungsgemäßen Zentriernase, der ausgerichteten Anlagefläche und der Führung wird ein Höchstmaß an Positionsgenauigkeit Hubdüsenanordnung zu der Öffnung der Außenwandung erreicht, so daß jeglicher zusätzliche Justieraufwand entfällt. Die Führungen können z. B. als U-förmige Führungsbahnen ausgebildet sein.

Die Öffnung kann wegen der Positionsgenauigkeit der Hubdüsenanordnung möglichst klein gewählt werden, wobei dennoch sichergestellt ist, daß die Hubdüsenanordnung während des Ausfahrvorganges nicht den Rand der Öffnung berührt. Ein Klemmen oder unsauberes Verschließen der Öffnung mit der Abdeckung wird somit sicher verhindert.

Die Zentriernase kann z. B. kegelförmig ausgebildet sein, so daß diese sowohl in vertikaler als auch in horizontaler Richtung eine Zentrierwirkung hat.

Erfindungsgemäß wird weiter vorgeschlagen einen Befestigungsansatz an der Außenwandung vorzusehen, an dem der Halteflansch befestigt werden kann. Karosserieteile der Außenwandung wie z. B. Stoßfänger werden in der Regel aus EPDM als Kunststoffspritzteile hergestellt, wodurch diese in ihrer Formgebung beschränkt sind. Der Befestigungsansatz kann dann beispielsweise als gesondertes Teil ausgebildet werden und z. B. durch eine Schweißverbindung nachträglich mit der Außenwandung verbunden werden.

Ferner wird vorgeschlagen, daß die Abdeckung Zentriervorsprünge aufweist und die Zentriervorsprünge umfangseitig an dem Rand der Öffnung anliegen oder in die Öffnung eingreifen. Durch diese Zentriervorsprünge wird es erreicht, daß zwischen der Abdeckung und der Öffnung der Außenwandung ein gleichmäßiger Spalt gegeben ist.

Die Erfindung wird nachfolgend anhand eines Ausführungsbeispiels näher erläutert. Die Zeichnungen zeigen:
- Figur 1:: Hubdüseneinrichtung befestigt an einem Befestigungsansatz an einer Außenwandung eines Kraftfahrzeuges,
- Figur 2:: Befestigung der Hubdüseneinrichtung mittels eines Halteflansches an einem Befestigungsansatz
- Figur 3:: Führung des Halteflansches

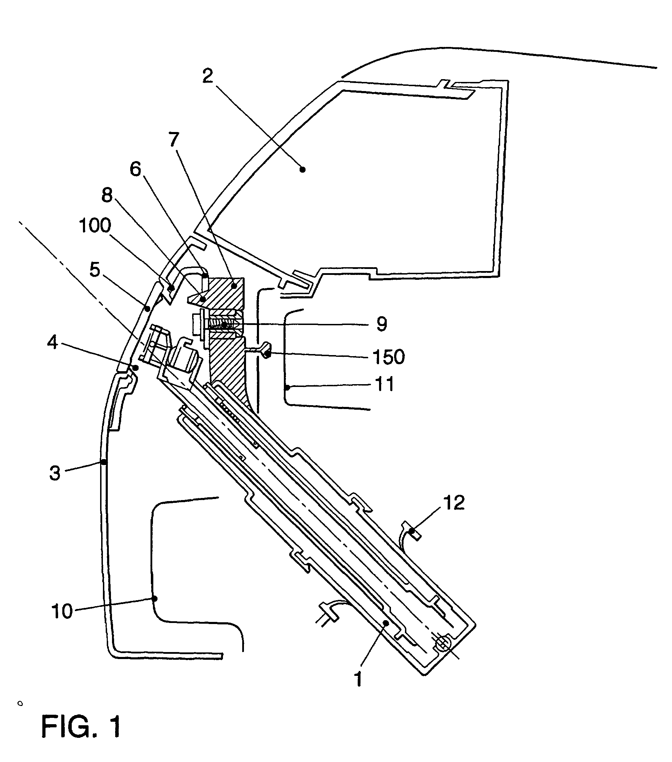

In Figur 1 ist eine Hubdüsenanordnung 1 unterhalb eines Scheinwerfers 2 zu erkennen. Die Hubdüseneinrichtung 1 ist kopfseitig mittels eines Halteflansches 7 an dem Befestigungsansatz 6 starr befestigt. Ferner weist die Hubdüseneinrichtung eine zweite schwimmende Befestigung in einer Fächerscheibe 12 auf. Die Fächerscheibe 12 kann beispielsweise an dem Querträger 10 oder dem Kunststoffmontageträger 11 befestigt sein. Wichtig ist hier, daß die Lagerung in der Fächerscheibe 12 schwimmend erfolgt, so daß keine Zwangskräfte durch Fertigungsungenauigkeiten bei der Befestigung entstehen. Die Hubdüsenanordnung 1 wird beispielsweise durch einen hier nicht erkennbaren von innen aufgebrachten Wasserdruck oder elektromotorischen Antrieb durch die Öffnung 4 der Außenwandung 3 hindurch in eine Betriebsposition ausgefahren.

Die Öffnung 4 wird in der Ruheposition der Hubdüsenanordnung 1 durch die Abdeckung 5 verschlossen. Die Abdeckung 5 kann beispielsweise starr oder schwimmend mit dem Kopf der Hubdüsenanordnung 1 verbunden sein, oder wie in der deutschen Patentschrift DE 44 26 878 beschrieben mittels eines Federmittels schwenkbar an dem Stoßfänger befestigt sein. Der Befestigungsansatz 6 ist mittels einer Schweißverbindung 100 an der Außenwandung 3 wie z. B. einem Stoßfänger befestigt. Stoßfänger werden z. B. durch Spritzgießen hergestellt, wodurch die Formgebung eingeschränkt ist. Durch das nachträgliche Anschweißen des Befestigungsansatzes 6 kann der Befestigungsansatz 6 selbst in seiner Form und Lage frei gewählt werden, ohne dadurch die Formgebung des Stoßfängers einzuschränken. Der Befestigungsansatz 6 weist eine Anlagefläche 101 auf. In der Anlagefläche 101 ist eine Zentrieröffnung 104 vorgesehen. In diese Zentrieröffnung 104 greift die Zentriernase 8 ein. Die Zentriernase 8 ist vorteilhafterweise kegelförmig ausgebildet, so daß sie eine Zentriermöglichkeit in horizontaler als auch in vertikaler Richtung ermöglicht. Durch die Wahl der Größe und der Ausrichtung der entsprechenden Anlagefläche 101 und des Halteflansches 7 kann eine entsprechend genaue Lagepositionierung der Hubdüsenanordnung 1 gegenüber der Außenwandung 3 erfolgen. Die Anlagefläche 101 schließt mit der Außenwandung 3 einen spitzen Winkel α ein. Dieser spitze Winkel α sollte möglichst klein oder sogar gleich 0 gewählt werden, so daß eine möglichst genaue Zentrierung in horizontaler und vertikaler Richtung möglich ist. Die Hubdüsenanordnung 1 ist mittels eines Befestigungsmittels 102 an dem Befestigungsansatz 6 befestigt. Zwischen dem Befestigungsmittel 102 und dem Befestigungsansatz 6 und/oder dem Halteflansch 7 ist ein Spiel vorgesehen. Die Hubdüsenanordnung 1 kann dadurch während der Montage in ihre Sollposition eingestellt werden und in dieser dann mittels des Befestigungsmittels 102 befestigt werden. Das Befestigungsmittel 102 kann beispielsweise eine Schraubenmutterverbindung 9 oder dergleichen sein.

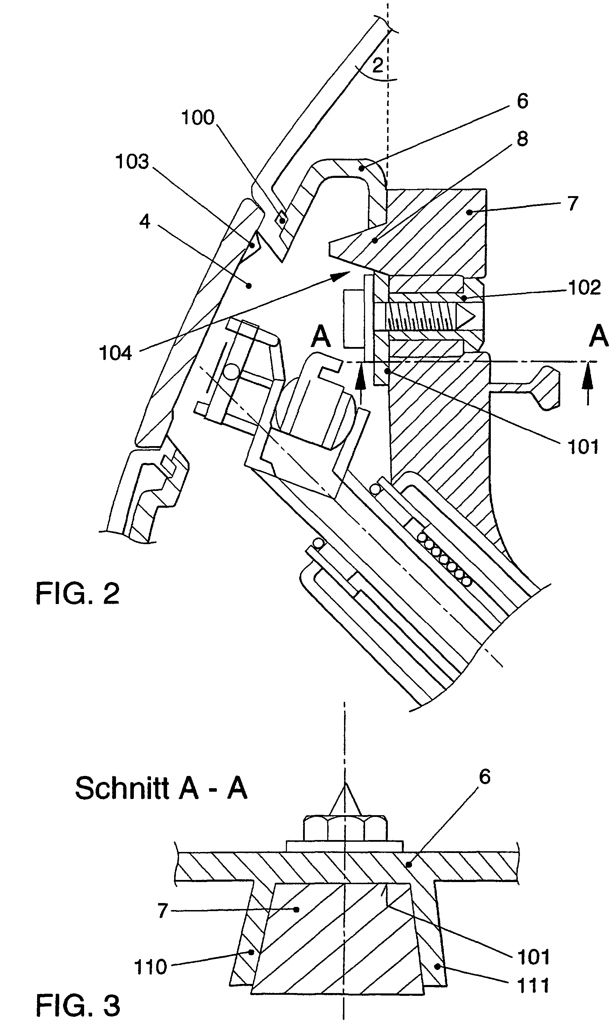

Die Abdeckung 5 kann vorteilhafterweise Zentriervorsprünge 103 aufweisen. Wie in Figur 2 zu erkennen ist, sind die Zentriervorsprünge 103 in die Öffnung 4 eingreifend ausgebildet. Die Zentriervorsprünge 103 sind kegelig ausgebildet, so daß beim Einfahren der Hubdüseneinrichtung eine selbständige Lagepositionierung der Abdeckung 5 in der Öffnung 4 stattfindet. Die Zentriervorsprünge 103 können jedoch auch umfangseitig an der Abdeckung 5 vorgesehen sein, so daß diese durch Anliegen an der Außenwandung 3 einen gleichmäßigen Spalt zwischen der Abdeckung 5 und der Außenwandung 3 sicherstellen.

In Fig.3 ist der Schnitt A-A dargestellt, aus dem zu erkennen ist, daß der Halteflansch 7 in dem U-förmig ausgebildeten Befestigungsansatz 6 geführt ist. Hierdurch wird eine zusätzliche Zentrierung zu erkennen.

### BEZUGSZEICHEN

- 1: Hubdüsenanordnung
- 2: Scheinwerfer
- 3: Außenwandung
- 4: Öffnung
- 5: Abdeckung
- 6: Befestigungsansatz
- 7: Halteflansch
- 8: Zentriernase
- 9: Schraubenmutterverbindung
- 10: Querträger
- 11: Kunststoffmontageträger
- 12: Fächerscheibe

- 100: Schweißverbindung
- 101: Anlagefläche
- 102: Befestigungsmittel
- 103: Zentriervorsprünge
- 104: Zentrieröffnung

- α: Winkel

## Patentansprüche

1. Scheinwerferreinigungsanlage für ein Kraftfahrzeug mit einer durch eine Öffnung in einer Außenwandung (3) des Kraftfahrzeuges teleskopartig in eine Betriebsposition ausfahrbaren Hubdüsenanordnung (1), zu deren Lagefixierung zwei in unterschiedliche Richtungen gerichtete Zentrierungen und/oder Führungen vorgesehen sind, wobei die Öffnung in der Außenwandung (3) in einer Ruheposition der Hubdüsenanordnung (1) durch eine Abdeckung (5) verschlossen ist, **dadurch gekennzeichnet, dass** die Hubdüseneinrichtung (1) einen Halteflansch (7) aufweist und die Zentrierungen und/ oder Führungen dem Halteflansch (7) zugeordnet sind.

2. Scheinwerferreinigungsanlage nach Anspruch 1, **dadurch gekennzeichnet, dass** an der Außenwandung ein Befestigungsansatz (6) mit einer Anlagefläche (101) vorgesehen ist, an der der Halteflansch (7) befestigbar ist.

3. Scheinwerferreinigungsanlage nach Anspruch 2, **dadurch gekennzeichnet, dass** die Anlagefläche (101) im wesentlichen parallel oder unter Einschluß eines spitzen Winkels (α) zu der Außenwandung (3) verläuft.

4. Scheinwerferreinigungsanlage nach Anspruch 1, **dadurch gekennzeichnet, dass** eine Zentrierung und/ oder Führung als kegelförmige Zentriernase (8) ausgebildet ist und in eine Öffnung des Befestigungsansatzes (6) eingreift, und dass eine Zentrierung und/ oder Führung als U-förmige Führungsbahn ausgebildet ist.

5. Scheinwerferreinigungsanlage nach einem der Ansprüche 2 oder 4, **dadurch gekennzeichnet, dass** der Befestigungsansatz (6) mit der Außenwandung (3) mittels einer Schweißverbindung (100) verbunden ist.

6. Scheinwerferreinigungsanlage nach Anspruch 1, **dadurch gekennzeichnet, dass** die Abdeckung (5) Zentriervorsprünge (103) aufweist.

7. Scheinwerferreinigungsanlage nach Anspruch 6, **dadurch gekennzeichnet, dass** die Zentriervorsprünge (103) umfangseitig an dem Rand der Öffnung (4) anliegen oder in die Öffnung (4) eingreifen.

## Claims

1. Headlamp cleaning device for a vehicle, with a lifting nozzle arrangement (1) which can be extended telescopically into an operating position through an opening in an outer wall (3) of the vehicle and for the positional fixing of which two centring means and/or guides which are directed in different directions are provided, the opening in the outer wall (3) being closed by a covering (5) in an inoperative position of the lifting nozzle arrangement (1), **characterized in that** the lifting nozzle arrangement (1) has a retaining flange (7) and the centring means and/or guides are assigned to the retaining flange (7).

2. Headlamp cleaning device according to Claim 1, **characterized in that** a fastening attachment (6) with a bearing surface (101) to which the retaining flange (7) can be fastened is provided on the outer wall.

3. Headlamp cleaning device according to Claim 2, **characterized in that** the bearing surface (101) runs essentially parallel to, or enclosing an acute angle (α) with respect to the outer wall (3).

4. Headlamp cleaning device according to Claim 1, **characterized in that** a centring means and/or guide is designed as a conical centring lug (8) and engages in an opening of the fastening attachment (6), and **in that** a centring means and/or guide is designed as a U-shaped guide path.

5. Headlamp cleaning device according to one of Claims 2 or 4, **characterized in that** the fastening attachment (6) is connected to the outer wall (3) by means of a welding connection (100).

6. Headlamp cleaning device according to Claim 1, **characterized in that** the covering (5) has centring projections (103).

7. Headlamp cleaning device according to Claim 6, **characterized in that** the centring projections (103) rest peripherally on the edge of the opening (4) or engage in the opening (4).

## Revendications

1. Dispositif de nettoyage des phares pour un véhicule automobile comprenant un arrangement de buse à excursion (1) pouvant être sortie dans une position de fonctionnement à la manière d'un télescope à travers une ouverture dans une paroi extérieure (3) du véhicule automobile, deux dispositifs de centrage et/ou de guidage dirigés dans des directions différentes étant prévus pour les fixer dans leur position, l'ouverture dans la paroi extérieure (3) étant fermée par un capot (5) dans une position de repos de l'arrangement de buse à excursion (1), **caractérisé en ce que** le dispositif à buse à excursion (1) présente une bride de maintien (7) et les dispositifs de centrage et/ou de guidage sont associés à la bride de maintien (7).

2. Dispositif de nettoyage des phares selon la revendication 1, **caractérisé en ce qu'**un appendice de fixation (6) muni d'une surface d'appui (101) sur laquelle peut se fixer la bride de maintien (7) est prévu sur la paroi extérieure.

3. Dispositif de nettoyage des phares selon la revendication 2, **caractérisé en ce que** la surface d'appui (101) s'étend pour l'essentiel parallèlement ou sous un angle aigu (α) vers la paroi extérieure (3).

4. Dispositif de nettoyage des phares selon la revendication 1, **caractérisé en ce qu'**un dispositif de centrage et/ou de guidage est réalisé sous la forme d'un tenon de centrale (8) conique et pénètre dans une ouverture de l'appendice de fixation (6) et qu'un dispositif de centrage et/ou de guidage est réalisé sous la forme d'une bande de guidage en forme de U.

5. Dispositif de nettoyage des phares selon l'une des revendications 2 ou 4, **caractérisé en ce que** l'appendice de fixation (6) est relié à la paroi extérieure (3) au moyen d'une liaison soudée (100).

6. Dispositif de nettoyage des phares selon la revendication 1, **caractérisé en ce que** le capot (5) présente des éléments en saillie de centrage (103).

7. Dispositif de nettoyage des phares selon la revendication 6, **caractérisé en ce que** les éléments en saillie de centrage (103) reposent sur leur pourtour sur le bord de l'ouverture (4) ou pénètrent dans l'ouverture (4).
